# EUROPEAN PATENT SPECIFICATION

(11) **EP 1 720 432 B1**
(45) Date of publication and mention of the grant of the patent: **16.04.2008**
(21) Application number: 05706778.7
(22) Date of filing: 22.02.2005
(51) Int. Cl.: A47G 33/12

(54) **CONNECTING A CHRISTMAS TREE TO A CHRISTMAS TREE STAND**
VERBINDEN EINES WEIHNACHTSBAUMS MIT EINEM WEIHNACHTSBAUMSTÄNDER
LIAISON ENTRE UN SAPIN DE NOEL ET SON SOCLE

(30) Priority: 04.03.2004 DK 200400368
(43) Date of publication of application: 15.11.2006
(73) Proprietor: PETERSEN,, Jesper, DK-8870 Lang (DK)
(72) Inventor: PETERSEN,, Jesper, DK-8870 Lang (DK)
(74) Representative: Hansen, Kaj
(86) International application number: PCT/DK2005/000116
(87) International publication number: WO 2005/084500

(56) References cited:
- WO-A1-94/06332
- DE-U1- 9 205 645
- DE-U1- 20 212 644
- DK-U3- 9 700 241
- US-A- 2 933 274
- US-A- 4 408 415
- US-A1- 2003 084 607

## Description

The present invention relates to the connection of a Christmas tree to a Christmas tree stand by means of a connecting piece. The invention relates to a method of connection, to the assembly of the Christmas tree and the stand as well as to a connecting piece.

### BACKGROUND OF THE INVENTION

The problem of connecting a Christmas tree to its stand, to fasten the two safely to each other and to provide the Christmas tree with a correct vertical orientation has been a challenge to which many solutions have been provided.

In particularly one type of Christmas tree stand involves a cumbersome method of fastening the tree to it. The stand is made from a piece of wood, such as a length of a tree trunk that has been halved in the longitudinal direction, and in which a hole is drilled for accommodating the lower end of the trunk of the Christmas tree. The end of the Christmas tree trunk is given a tapered shape manually or at least partly manually, after which it is inserted into the hole in the stand. In case the Christmas tree trunk does not fit into the hole or the Christmas tree is not in the correct vertical orientation, i.e. is out of plumb, the end of the Christmas tree trunk has to be removed from the stand and reshaped. The process is thus very labour-intensive.

It is therefore an object of the present invention to provide an improved manner of connecting a Christmas tree to a Christmas tree stand.

This is provided by the present invention, in which a connecting piece is fastened to the cut surface of the trunk of the Christmas tree, the connecting piece having a convex substantially spherical surface part of a first diameter, and the connecting piece is inserted in the opening of a Christmas tree stand preferably made from a resilient material, wherein the opening has a substantially circular cross section of a second diameter smaller than the first diameter. The residency of the material, preferably wood, but rubber, plastics materials etc. may also be used allows the connecting piece with a larger diameter to be entered into the opening at the application of a force pushing the Christmas tree longitudinally towards the opening. The strain of the material of the Christmas tree stand and/or the connecting piece due to the deformation caused by the connecting piece provides an elastic holding force that locks the connecting piece and the stand together and preserves a vertical orientation of the Christmas tree. However, the vertical orientation of the tree may be adjusted manually by grabbing an upper end of the tree and pulling or pushing it in the correct direction, causing the connecting piece to change orientation within the opening in the stand.

The advantages of the present invention are that the Christmas tree is connected safely to the stand, that the connection is obtained easily by fastening the connecting piece, e.g. by means of screws, to the cut surface of the trunk without the need to change the shape of the trunk or even to correct a slandered cut surface, the orientation of the tree may be corrected in a simple manner and the full length of the tree as felled may be used, because it is not necessary to enter a part of the trunk into the stand, thereby saving about 10 cm of each Christmas tree. These and other advantages will be apparent from the following description.

Various types of Christmas tree stands using cooperating spherical surfaces are well known in the art and are disclosed e.g. in DE 198 55 705, US 6,010,108, US 5,398,444, US 5,577,701 and in EP 0 943 273. The use of spherical connecting pieces is in particular disclosed in DK 1999 00353 U3 and US 5,938,167, but none of the disclosed Christmas tree stands provide a solution to the above problem.

From US-A-2 933 274 is known a connecting piece for connecting a Christmas tree to a Christmas tree stand, the piece having a substantially plane surface with a through-hole provided therein and a convex substantially spherical surface extending from said plane surface. The piece when seated in an open ball socket forms therewith a ball joint universally supporting the trunk of a Christmas tree. This ball joint just forms a part of a complex steel structure with curved bracing sections fastened by screws to the trunk above the ball joint.

### BRIEF DESCRIPTION OF THE INVENTION

The present invention relates in a first aspect thereof to a method for fastening a Christmas tree to a Christmas tree stand, as defined in claim 1.

The method may further comprise the step of adjusting the vertical orientation of the Christmas tree.

The second diameter is in a preferred embodiment within 0.2 to 3 mm, preferably within 0.35 to 1.8 mm smaller than the first diameter. In the disclosed embodiments, the second diameters are within 0.5 to 1 mm smaller than the first diameter, i.e. 0.5, 0.8 and 1 mm smaller, respectively.

The standard cross-sectional sizes of the openings in the Christmas tree stands are 40, 50 and 60 mm, and the outer diameter of the convex spherical surface of the connecting piece according to the present invention is consequently preferably within a range selected from the group consisting of 40.2 to 43 mm, 50.2 to 53 mm and 60.2 to 63 mm, most preferred within a range selected from the group consisting of 40,35 to 41.8 mm, 50.35 to 51.8 mm and 60.35 to 61.8 mm.

In a second aspect, the present invention relates to a connecting piece for connecting a Christmas tree to a Christmas tree stand, as defined in claim 5.

### BRIEF DESCRIPTION OF THE DRAWING

Embodiments of the invention are disclosed below with reference to the enclosed drawing of which
- Fig. 1: shows three different Christmas tree stands that are suitable for use with the present invention,
- Fig. 2: shows a vertical section of a Christmas tree connected to a Christmas tree stand by means of a connecting piece,
- Fig. 3: shows a vertical section of a Christmas tree connected to a Christmas tree stand by means of a connecting piece, in which the cut surface of the Christmas tree trunk is slandered.
- Fig. 4: shows a working drawing of a connecting piece for a 40 mm opening,
- Fig. 5: shows a working drawing of a connecting piece for a 50 mm opening, and
- Fig. 6: shows a working drawing of a connecting piece for a 60 mm opening.

### DETAILED DESCRIPTION OF EMBODIMENTS OF THE PRESENT INVENTION

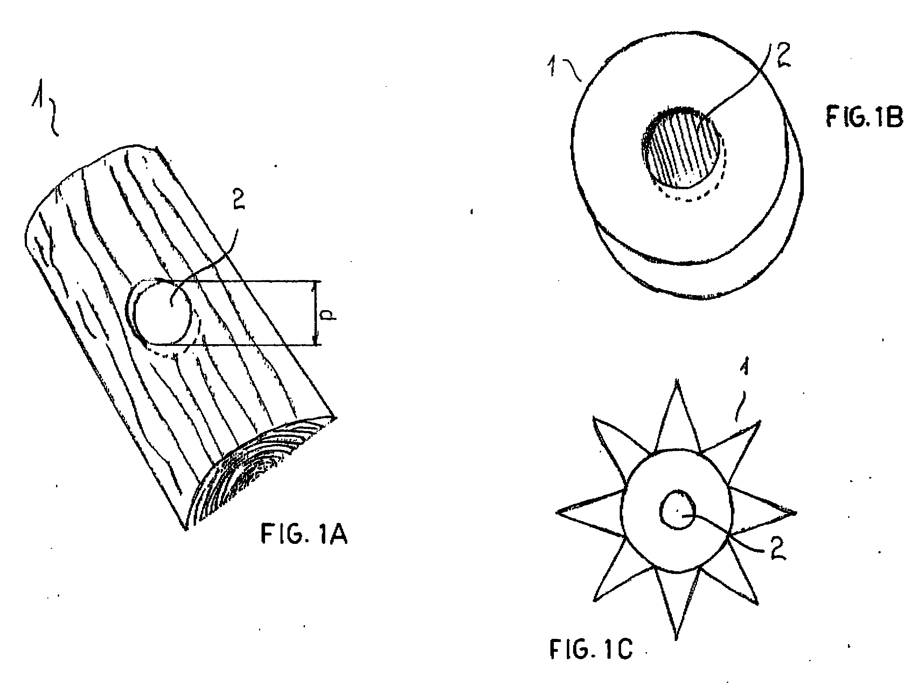

Fig. 1 shows three different Christmas tree stands 1 having an opening 2 provided therein of a substantially circular cross-sectional shape. The opening 2 is suitable for receiving the lower end of the trunk 3 of a Christmas tree, i.e. normally a fir tree that is 0.75 to 2.5 metres high. Standard cross-sectional diameters of the openings 2 are 40, 50 and 60 mm. Fig. 1A shows a stand 1 made from a length of a tree trunk that has been halved in the longitudinal direction, and in which a hole 2 is drilled for the lower end of the trunk 3 of the Christmas tree. Fig. 1B shows a stand 1 made from a length of a tree trunk in which a hole 2 is drilled in an end surface. Fig. 1C shows a more elaborated stand 1 from wood and intended for repeated use, whereas the stands in Figs. 1A and 1B are disposable stands 1 intended for a single use only.

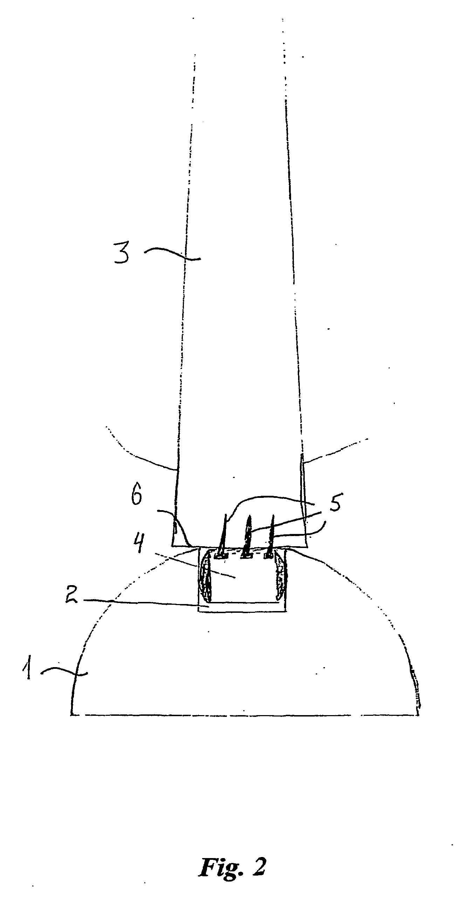

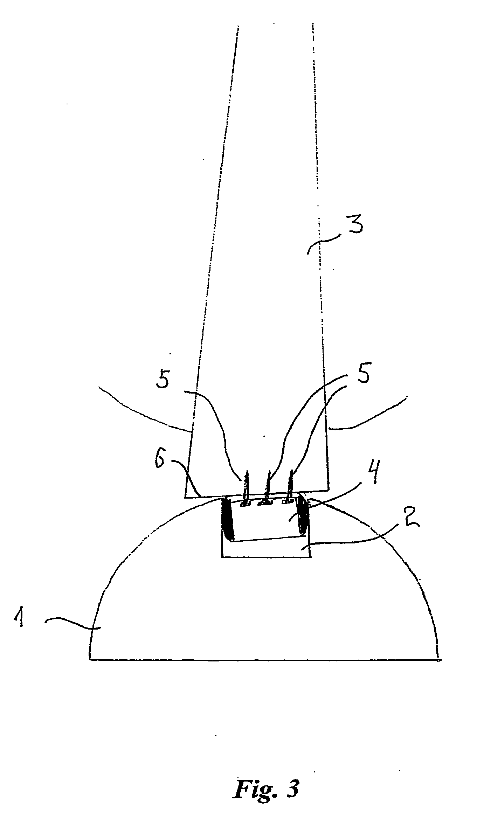

The connecting piece 4 is fastened by means of screws 5 onto the cut surface 6 of the trunk 3 as shown in Figs. 2 and 3. The connecting piece 4 has an upper substantially flat surface 7 matching the cut surface 6 of the trunk 3. The connecting piece 4 is pressed into the opening 2, which is of a slightly smaller cross-sectional diameter, so that the material of the stand 1 and/or the connecting piece 4 is strained and due to the deformation caused by the connecting piece provides an elastic holding force that locks the connecting piece and the stand together and preserves a vertical orientation of the Christmas tree. In Fig. 3, a situation is shown where the cut surface 6 of the trunk 3 is slandered, i.e. that it is not perpendicular to the longitudinal direction of the Christmas tree. The connecting piece 4 is as in Fig. 2 fastened to the cut surface 6 by means of screws, and the connecting piece 4 is inserted into the opening 2. Due to the spherical surface part of the connecting piece 4 the Christmas tree may in this situation also be arranged to extend vertically from the stand 1.

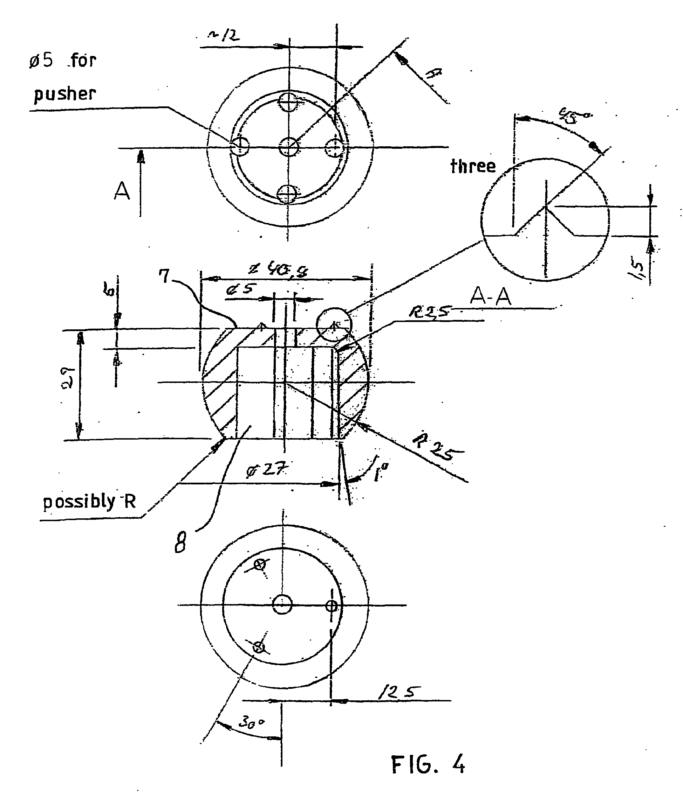

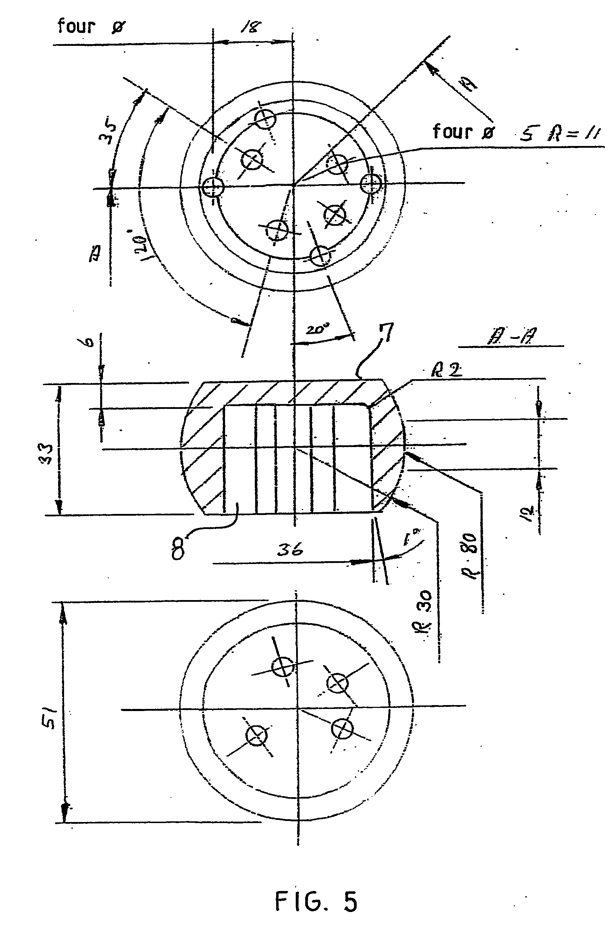

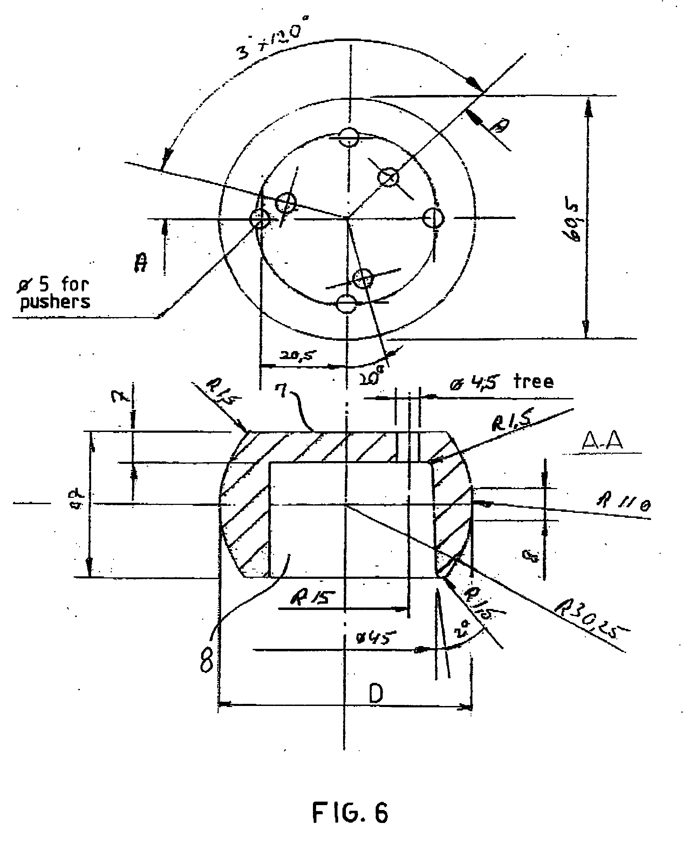

In Figs. 4, 5 and 6, working drawings of connecting pieces 4 for openings of 40, 50 and 60 mm of cross-sectional diameter, respectively, are shown. The outer diameters of the connecting pieces are in this embodiment selected to be 40.8, 51 and 60.5 mm, respectively. All measures on the drawings are given in millimetres. All the shown connecting pieces 4 have an opening 8 provided on the side opposite to the plane surface 7 and extending towards the plane surface 7 and perpendicularly to it through most of the inner part of the piece 4. The cross-sectional area of the opening 8 is preferably sufficiently large as compared to the largest cross-sectional area of the piece 4, in the shown examples 0.52, 0.56 and 0.45 mm, respectively, to provide the walls of the piece 4 with some resiliency. An area ratio of between 0.3 and 0.7 mm is preferred. The material of the connecting piece 4 may be any suitable material, preferably a high-density polyethylene (HDPE).

## Claims

1. Method for fastening a Christmas tree to a Christmas tree stand, comprising the steps of
fastening a connecting piece (4) to the cut surface (6) of the trunk (3) of the Christmas tree, the connecting piece (4) having a convex substantially spherical surface with a first diameter (D),
and inserting the connecting piece (4) into an opening (2) of a Christmas tree stand (1), the opening (2) having a substantially circular cross section of a second diameter (d) smaller than the first diameter (D),
wherein the walls of the connecting piece (4) are provided with some resiliency, the resiliency between the connecting piece (4) and the Christmas tree stand (1) allowing the connecting piece (4) to be entered into the opening (2) at the application of a force pushing the Christmas tree longitudinally towards the opening (2), the strain of the material of the Christmas tree stand (1) and/or the connecting piece (4) due to the deformation caused by the connecting piece (4) provides an elastic holding force that locks the connecting piece (4) and the stand (1) together and preserves a vertical orientation of the Christmas tree.

2. Method according to claim 1, further comprising the step of adjusting the vertical orientation of the Christmas tree.

3. Method according to claim 1 or 2, wherein the Christmas tree stand (1) comprises a wooden block wherein said opening (2) is provided.

4. Method according to any of claims 1-3, wherein the second diameter (d) is within 0.2 to 3 mm, preferably within 0.35 to 1.8 mm, smaller than the first diameter (D).

5. Connecting piece for connecting a Christmas tree to a Christmas tree stand, the connecting piece (4) having a substantially plane surface (7) with at least one through-hole provided therein and a convex substantially spherical surface extending from said plane surface (7),
***characterised* in that**
the connecting piece (4) has an opening (8) provided on the side opposite to the plane surface (7) which extends towards the plane surface (7) through most of the inner part of the connecting piece (4), the opening (8) having a cross-sectional area of between 0.3 and 0.7 of the largest cross-sectional area of the connecting piece (4), so that the walls of the connecting piece (4) are provided with some resiliency.

## Patentansprüche

1. Methode zur Befestigung eines Weihnachtsbaums in einem Weihnachtsbaumständer, bestehend aus drei Schritten zur Befestigung eines Anschlussstücks (4) an der Schnittfläche (6) am Weihnachtsbaumstamm (3), wobei das Anschlussstück (4) eine konvexe und vorzugsweise kugelförmige Oberfläche mit einem ersten Durchmesser (D) hat,
und Einsatz des Anschlussstücks (4) in eine Öffnung (2) am Weihnachtsbaumständer (1), wobei die Öffnung (2) vorzugsweise einen kreisrunden Querschnitt eines zweiten Durchmessers (d) hat, der kleiner ist als der erste Durchmesser (D),
wobei die Wände des Anschlussstücks (4) mit einer gewissen Elastizität versehen sind, und die Elastizität zwischen dem Anschlussstück (4) und dem Weihnachtsbaumständer (1) den Einsatz des Anschlusstücks (4) in die Öffnung (2) durch Verwendung einer den Weihnachtsbaum in Längsrichtung zur Öffnung (2) schiebende Kraft ermöglicht, wobei die Spannung des Materials des Weihnachtsbaumständers (1) und/oder des Anschlussstücks (4) wegen der durch das Anschlussstück (4) verursachten Verformung eine elastische Haltekraft bewirkt, mittels der das Anschlussstück (4) und der Ständer (1) mit einander verriegelt werden und die eine vertikale Ausrichtung des Weihnachtsbaums sichert.

2. Methode nach Anspruch 1, die ferner den Schritt zur Einstellung der vertikalen Ausrichtung des Weihnachtsbaums umfasst.

3. Methode nach Anspruch 1 oder 2, bei der der Weihnachtsbaumständer (1) aus einem Holzblock mit der genannten Öffnung (2) besteht.

4. Methode nach Anspruch 1-3, bei der der zweite Durchmesser (d) innerhalb 0,2 bis 3 mm liegt, vorzugsweise innerhalb 0,35 bis 1,8 mm, kleiner als der erste Durchmesser (D).

5. Anschlussstück für die Befestigung eines Weihnachtsbaums in einem Weihnachtsbaumständer, wobei das Anschlussstück (4) vorzugsweise eine ebene Oberfläche (7) mit mindestens einem durchgehenden Loch darin und eine konvexe, vorzugsweise kugelförmige, von der genannten ebenen Oberfläche verlängerte Oberfläche (7) hat,
**dadurch *gekennzeichnet*, dass**
das Anschlussstück (4) mit einer Öffnung (8) auf der der ebenen Oberfläche gegenüberliegenden Seite versehen ist, welche Öffnung sich durch den größten Teil des Anschlussstück-Innenteils (4) zur ebenen Oberfläche (7) hin erstreckt, wobei die Öffnung (8) eine Querschnittfläche zwischen 0,3 und 0,7 der größten Querschnittfläche des Anschlussstücks (4) hat und die Wände des Anschlussstücks (4) mit einer gewissen Elastizität versehen sind.

## Revendications

1. Méthode pour la fixation d'un arbre de Noël à un support à arbre de Noël comprenant les étapes de la fixation d'une pièce de connexion (4) à la surface de coupe (6) du tronc (3) de l'arbre de Noël où la pièce de connexion (4) a une surface convexe de forme approximativement sphérique avec un premier diamètre (D),
et de l'introduction de la pièce de connexion (4) dans une ouverture (2) d'un support à arbre de Noël (1) où l'ouverture (2) a une section transversale approximativement circulaire d'un deuxième diamètre (d) inférieur au premier diamètre (D),
où les parois de la pièce de connexion (4) présentent une certaine résilience où la résilience entre la pièce de connexion (4) et le support à arbre de Noël (1) permet l'introduction de la pièce de connexion (4) dans l'ouverture (2) en appliquant une force qui pousse, dans le sens longitudinal, l'arbre de Noël vers l'ouverture (2) où la déformation du matériau du support à arbre de Noël (1) et/ou de la pièce de connexion (4), due à la déformation causée par la pièce de connexion (4), a pour effet une force de maintien élastique qui verrouille ensemble la pièce de connexion (4) et le support (1) et maintient l'orientation verticale de l'arbre de Noël.

2. Méthode selon la revendication 1 comprenant en outre le réglage de l'orientation verticale d'un arbre de Noël.

3. Méthode selon la revendication 1 ou 2 où le support à arbre de Noël (1) comprend un bloc de bois équipé de ladite ouverture (2).

4. Méthode selon une ou plusieurs des revendications 1-3 où le deuxième diamètre (d) est inférieur de 0,2 à 3 mm, de préférence de 0,35 à 1,8 mm, au premier diamètre (D).

5. Pièce de connexion pour la fixation d'un arbre de Noël à un support à arbre de Noël où la pièce de connexion (4) a une surface approximativement plane (7) avec au moins un seul trou débouchant et une surface convexe approximativement sphérique qui s'étend de ladite surface plane (7),
***caractérisée* en ce que**
la pièce de connexion (4) a une ouverture (8) sur le côté opposé de la surface plane (7) qui s'étend vers la surface plane (7) à travers la plupart de la partie intérieure de la pièce de connexion (4) où l'ouverture (8) a une zone de section transversale d'entre 0,3 et 0,7 de la plus grande zone de section transversale de la pièce de connexion (4), ce qui donne aux parois de la pièce de connexion (4) une certaine résilience.
